# EUROPÄISCHE PATENTSCHRIFT

(11) **EP 2 975 311 B1**
(45) Veröffentlichungstag und Bekanntmachung des Hinweises auf die Patenterteilung: **22.03.2017**
(21) Anmeldenummer: 15176857.9
(22) Anmeldetag: 15.07.2015
(51) Int. Cl.: F16L 25/00

(54) **SCHLAUCHVERSCHRAUBUNG**
SCREW COUPLING FOR HOSES
RACCORD A VIS POUR TUYAUX SOUPLES

(30) Priorität: 15.07.2014 DE 202014005766 U
(43) Veröffentlichungstag der Anmeldung: 20.01.2016
(73) Patentinhaber: WISKA Hoppmann GmbH, 24568 Kaltenkirchen (DE)
(72) Erfinder: GEHRE, Peter, 24568 Kaltenkirchen (DE)
(74) Vertreter: Eisenführ Speiser

(56) Entgegenhaltungen:
- EP-A1- 0 528 101
- EP-A1- 1 333 215
- EP-A1- 1 653 583
- WO-A1-01/20216
- WO-A1-98/40656
- DE-U1- 9 007 056

## Beschreibung

Die Erfindung betrifft eine Verbindungsvorrichtung zum Verbinden eines Wellrohres mit einer zweiten Einheit, mit einem im Wesentlichen buchsenförmigen Grundkörper, der eine Öffnung zur Aufnahme des Wellrohres hat, und einer mit dem Grundkörper verbundenen Anschlusseinrichtung zum Anschließen des Grundkörpers an die zweite Einheit, und eine Arretiereinheit zum Arretieren des Wellrohres in dem Grundkörper.

Verbindungsvorrichtungen dieser Art werden dazu eingesetzt, Wellrohre, die im Baubereich häufig als Hülsrohr oder im Sanitärbereich auch medienführend eingesetzt werden, mit einer weiteren zweiten Einheit, beispielsweise einem Schlauch, einem Rohr, einem Flansch oder dergleichen zu verbinden. Wellrohre selbst weisen in der Regel keine eigenen Verbindungsvorrichtungen auf, da sie meist als Meterware vorliegen und entsprechend ihrer gewünschten Länge zugeschnitten werden. Wellrohre lassen sich nur unzureichend mit herkömmlichen Schlauch- oder Rohrverbindern, wie beispielsweise Rohrschellen, verbinden. Dies liegt in erster Linie an dem strukturierten gewellten Rohrmantel des Wellrohres. Aufgrund dieser Struktur lassen sich Wellrohre häufig auch nur erschwert abdichten. Ein weiteres Problem bei der Kopplung von Wellrohren mit weiteren Einheiten liegt darin, dass Wellrohre unter hohen Spannkräften, wie sie beispielsweise von herkömmlichen Schlauchschellen ausgeübt werden, zusammengedrückt werden können, wodurch das Wellrohr zerstört werden kann oder die Dichtung leidet.

Solche Verbindungsvorrichtungen werden in vielen Anwendungen in großer Anzahl eingesetzt und unterliegen daher als Massenprodukte einem hohen Preisdruck, aus dem das Bestreben einer kostengünstigen Fertigungsweise resultiert. Ungeachtet dessen, dass daher sowohl bei den Material-, als auch den Fertigungskosten Einsparungen angezeigt und angestrebt sind, wird an eine Verbindungsvorrichtung der Anspruch gestellt, dass diese die miteinander gekoppelten Rohre oder Schläuche zuverlässig verbindet. Insbesondere ist auch Fluiddichtigkeit und Dauerhaftigkeit der Verbindung gefordert.

Aus DE 90 07 056 U1 ist eine Verbindungsvorrichtung zum Verbinden eines Wellrohres mit einem Schlauch bekannt. Diese besteht aus einem im Wesentlichen buchsenförmigen Grundkörper, der eine Öffnung zur Aufnahme des Wellrohres hat sowie einer mit dem Grundkörper verbundenen Anschlusseinrichtung zum Anschließen des Grundkörpers an einen Schlauch. Von dem Grundkörper aus erstreckt sich in axialer Richtung eine Mehrzahl an Verriegelungskrallen. Die Verbindungsvorrichtung weist ferner einen zweiten äußeren Ring auf, der bei der Montage so über die Verriegelungskrallen anzuordnen ist, dass diese so zum Wellrohr hin verschwenkt oder elastisch verbogen werden, dass Vorsprünge der Verriegelungskrallen in Täler des Wellrohrs eingreifen und so die Verriegelungsvorrichtung fest mit dem Wellrohr verbinden.

Aus EP 0 528 101 A1 ist ein Verbindungs- und Anschlussstück zum Anschluss eines Wellrohres vorbekannt. Das Verbindungs- und Anschlussstück weist dabei einen Rohrstutzen mit Endflansch auf, von dem sich ein Mittelsteg erstreckt. An dem Mittelsteg sind mittels Filmscharnieren zwei Rohrmuffenteile schwenkbar angeordnet, die aus einer geöffneten Position in eine geschlossene Position verschwenkt werden können und ein Wellrohr hierbei umschließen.

Aus WO 98/40656 A1, WO 01/20216 A1, EP 1 653 583 A1, EP 1 333 215 A1 sind ähnlich konstruierte Bauteile zum Anschluss von Wellrohren vorbekannt, bei denen ein Halteelement verschwenkbar an einem Grundkörper gelagert ist und aus einer geöffneten in eine geschlossene Position verschwenkt werden kann.

Aufgabe der vorliegenden Erfindung ist eine Verbindungsvorrichtung der eingangs genannten Art zum Verbinden eines Wellrohres mit einer zweiten Einheit, insbesondere einem Schlauch, anzugeben, mittels welcher die Verbindung von Wellrohren mit einer zweiten Einheit wesentlich vereinfacht ist, bei der die Herstellungskosten verringert sind und insbesondere auch die Teileanzahl verringert ist.

Erfindungsgemäß wird diese Aufgabe durch eine Verbindungsvorrichtung nach Anspruch 1 gelöst.

Erfindungsgemäß ist bei der Verbindungsvorrichtung eine Arretiereinheit vorgesehen. Die Arretiereinheit ist erfindungsgemäß mit dem Grundkörper verbunden. Die mit dem Grundkörper verbundene Arretiereinheit ist zwischen einer geöffneten Position, in der das Wellrohr von dem Grundkörper entfernbar ist, und einer arretierten Position, in der das Wellrohr an dem Grundkörper arretiert ist, bewegbar. In der geöffneten Position kann demnach das Wellrohr in die dafür vorgesehene Öffnung an dem Grundkörper eingesetzt und aus dieser herausgenommen werden. In der arretierten Position ist das Wellrohr an dem Grundkörper arretiert, formschlüssig und/oder kraftschlüssig. Dadurch ist eine Verbindungsvorrichtung angegeben, die eine Einheit bildet, wodurch die Anzahl der Teile reduziert ist. Ferner ist durch die erfindungsgemäße Verbindungsvorrichtung die Montage vereinfacht, da es lediglich erforderlich ist, die Arretiereinheit von der geöffneten Position in die arretierte Position zu verbringen, um so das Wellrohr an den Grundkörper zu arretieren. Die zweite Einheit ist vorzugsweise ein Schlauch, ein Rohr, ein Schlauch- oder Rohrstutzen, ein Flansch, eine Art Aggregat oder dergleichen.

Gemäß einer ersten bevorzugten Ausführungsform ist die Arretiereinheit einstückig mit dem Grundkörper verbunden. Dadurch können die Herstellungskosten weiter reduziert werden. Beispielsweise kann die Verbindungsvorrichtung insgesamt aus Kunststoff gefertigt sein und als ein einziges Spritzgussteil hergestellt werden.

Dabei ist es besonders bevorzugt, wenn die Arretiereinheit durch ein Filmscharnier mit dem Grundkörper verbunden ist. Ein Filmscharnier lässt sich auf einfache Art und Weise mittels Spritzgießen herstellen und bietet eine definierte Verbindung zwischen Grundkörper und Arretiereinheit. Vorzugsweise ist die Arretiereinheit relativ zu dem Grundkörper zwischen der geöffneten und arretierten Position schwenkbar. Das Filmscharnier ist vorzugsweise dazu vorgesehen, das Verschwenken der Arretiereinheit von der geöffneten Position in die arretierte Position und umgekehrt zu ermöglichen.

Erfindungsgemäß ist die Arretiereinheit mit einem schwenkbaren Steg mit dem Grundkörper verbunden. Die Arretiereinheit selbst ist vorzugsweise starr mit dem Steg verbunden. Der Steg ist vorzugsweise mittels des Filmscharniers mit dem Grundkörper verbunden. Dadurch weist die Arretiereinheit stets eine definierte Position gegenüber dem Grundkörper auf. In der geöffneten Position erstreckt sich der Steg vorzugsweise weg von dem Grundkörper, insbesondere in einer radialen Richtung. Dadurch ist die Arretiereinheit in der geöffneten Position von dem Grundkörper weggeschwenkt, wodurch die Montage des Wellrohres an dem Grundkörper vereinfacht ist.

Die Arretiereinheit, welche mittels des Stegs mit dem Grundkörper verbunden ist, weist einen starren, Arretierrücken und wenigstens einen beweglich an dem Arretierrücken angeordneten Arretierarm auf. Der Arretierrücken und der wenigstens eine Arretierarm wirken vorzugsweise zusammen, um das Wellrohr an dem Grundkörper zu arretieren. Dazu können der Arretierrücken und der wenigstens eine Arretierarm das Wellrohr kraft- und/oder formschlüssig an dem Grundkörper halten. Der Arretierrücken ist vorzugsweise starr mit dem Steg verbunden und so mittels des Stegs in Arretierposition in einer definierten Position gehalten. Der Arretierarm ist wiederum vorzugsweise beweglich an dem Arretierrücken befestigt. Vorzugsweise ist der Arretierarm einstückig, insbesondere mittels eines Filmscharniers, mit dem Arretierrücken verbunden. Dadurch lässt sich der wenigstens eine Arretierarm in der Arretierposition definiert zu dem Arretierrücken positionieren. Auch dadurch ist die Montage weiter vereinfacht. Indem der wenigstens eine Arretierarm und der Arretierrücken einstückig mittels eines Filmscharniers verbunden sind, ist auch die Herstellung weiter vereinfacht. Die Verbindungsvorrichtung kann beispielsweise als einstückiges Kunststoffspritzgussteil gefertigt werden.

Besonders bevorzugt sind an dem Arretierrücken zwei gegenüberliegende Arretierarme angeordnet. Die Arretierarme sind vorzugsweise also an gegenüberliegenden Enden des Arretierrückens mit diesem verbunden. Vorzugsweise sind beide Arretierarme mittels eines Filmscharniers mit dem Arretierrücken verbunden. Der Arretierrücken bildet so eine Halterung für die beiden Arretierarme. Indem zwei Arretierarme vorgesehen sind, können Kräfte vorteilhafter über die Verbindungsvorrichtung aufgenommen und übertragen werden und auch die Montage ist weiterhin vereinfacht.

Der Arretierrücken ist dabei starr mit dem Steg verbunden und zwischen einer geöffneten Position und einer arretierten Position bewegbar ist, wobei sich der Steg in der Arretierposition im Wesentlichen parallel zu einer Zentralachse des Grundkörpers erstreckt. So wird in der arretierten Position eine kompakte Form erreicht, wodurch ein mit einer erfindungsgemäßen Verbindungsvorrichtung ausgestattetes Wellrohr auch durch engere Durchlässe, wie etwa Wanddurchbrüche und dergleichen, durchführbar ist. Vorzugsweise ist an dem Grundkörper eine Ausnehmung vorgesehen und der Steg ist in der Arretierposition im Wesentlichen innerhalb dieser Ausnehmung angeordnet. Vorzugsweise liegt der Steg in der Arretierposition im Wesentlichen flächenbündig in der Ausnehmung an dem Grundkörper. Dadurch wird weiter eine kompakte Bauform erreicht.

Zusätzlich bietet die Ausnehmung einen seitlichen Halt für den Steg, so dass eine Kraftentlastung der Verbindung des Stegs mit dem Grundkörper, insbesondere des Filmscharniers, über welches der Steg mit dem Grundkörper verbunden ist, erreicht wird. Der Arretierrücken ist starr und vorzugsweise einstückig mit dem Steg verbunden.

Gemäß einer weiteren bevorzugten Ausführungsform weist die Arretiereinheit wenigstens ein erstes Formschlusselement auf, welches dazu vorgesehen ist, in der Arretierposition der Arretiereinheit in formschlüssigem Eingriff mit dem Wellrohr zum Arretieren des Wellrohres an dem Grundkörper zu stehen. Aufgrund ihrer äußeren Kontur eignen sich Wellrohre besonders gut für formschlüssige Verbindungen. Die Formschlussmittel können so gestaltet sein, dass sie mit Wellentälern oder mit Wellenbergen oder mit Beiden, sowohl Wellentälern als auch mit Wellenbergen zusammenwirken. Die Formschlussmittel sind vorzugsweise so gestaltet, dass sie in der Arretierposition in formschlüssigem Eingriff mit dem Wellrohr stehen, sofern das Wellrohr in der Öffnung des Grundkörpers angeordnet ist. Hierdurch ist die Montage weiterhin sehr vereinfacht. Ein Monteur muss zur Verbindung der Verbindungsvorrichtung mit einem Wellrohr lediglich das Wellrohr in die Öffnung einführen und die Arretiereinheit in die Arretierposition verbringen, in welcher dann das wenigstens eine erste Formschlusselement in formschlüssigen Eingriff mit dem Wellrohr steht und so das Wellrohr an dem Grundkörper arretiert wird.

Besonders bevorzugt ist dabei, dass wenigstens eine erste Formschlusselement an dem Arretierrücken und/oder an dem wenigstens einem Arretierarm angeordnet. Vorzugsweise weisen jeweils der Arretierrücken als auch der wenigstens eine Arretierarm ein erstes Formschlusselement auf. Dadurch lässt sich eine gleichmäßige Kraftübertragung erreichen. Zudem ist die Verbindungsvorrichtung fehlertoleranter, da die Formschlusselemente so redundant ausgelegt werden können.

In einer bevorzugten Weiterbildung ist der wenigstens eine Arretierarm einstückig, insbesondere durch ein Filmscharnier, mit dem Arretierrücken verbunden. Dadurch ist die Herstellung der Verbindungsvorrichtung weiter vereinfacht und kann beispielsweise durch kostengünstiges Spritzgießen erfolgen.

In einer besonders bevorzugten Ausführungsform sind der Arretierrücken und/oder der wenigstens eine Arretierarm dazu angepasst, in der Arretierposition das Wellrohr wenigstens abschnittsweise zu umgreifen. Vorzugsweise umgreifen der Arretierrücken und der wenigstens eine Arretierarm gemeinsam das Wellrohr vollständig. Hierdurch wird eine besonders gute Verbindung zwischen der Arretiereinheit und so auch der Verbindungsvorrichtung und dem Wellrohr erreicht. Zudem kann eine kompakte Bauform erreicht werden.

Vorzugsweise weisen dabei der Arretierrücken und/oder der wenigstens eine Arretierarm eine im Wesentlichen teilringförmige Grundform auf. Dadurch können diese besonders einfach das Wellrohr abschnittsweise umgreifen. Der Arretierrücken und die Arretierarme bilden vorzugsweise jeweils Ringsegmente, die gemeinsam einen im Wesentlichen vollständigen Ring bilden.

Gemäß einer weiteren bevorzugten Weiterbildung, bei der zwei Arretierarme vorgesehen sind, weist der Arretierrücken eine im Wesentlichen halbringförmige Grundform die Arretierarme jeweils eine im Wesentlichen viertelringförmige Grundform auf. In einer Alternative mit nur einem Arretierarm ist vorzugsweise der Arretierrücken im Wesentlichen halbringförmig und der Arretierarm ebenfalls im Wesentlichen halbringförmig gebildet. Alternativ ist bei einer Ausführungsform mit zwei Arretierarmen auch bevorzugt, dass der Arretierrücken etwa einem Drittelring entspricht und die Arretierarme jeweils ebenfalls etwa einem Drittelring entsprechen. Auch andere Konfigurationen sind denkbar und bevorzugt. So ist es ebenfalls möglich, dass der Arretierrücken eine viertelringförmige Grundform hat und ein erster Arretierarm ebenfalls eine viertelringförmige Grundform hat, während ein zweiter Arretierarm im Wesentlichen halbringförmig gebildet ist. Je nach Einsatzzweck und Gestaltung von Verbindungsmitteln, wie etwa ersten Formschlussmitteln, kann die eine oder andere Konfiguration bevorzugt sein.

Gemäß einer bevorzugten Weiterbildung ist das erste Formschlusselement als ein Vorsprung ausgebildet, insbesondere eine Rippe, die dazu vorgesehen ist, in ein äußeres Wellenteil des Wellrohres formschlüssig einzugreifen. Die Rippe erstreckt sich vorzugsweise an dem Arretierrücken und/oder den Arretierarmen innerlich in radialer Weise derart, dass die Rippen gemeinsam in der Arretierposition einen Ring definieren, der einen Durchmesser aufweist, welcher kleiner ist als der Außendurchmesser des Wellrohres, gemessen am Wellenberg, jedoch gleich oder etwas größer ist als der Durchmesser des Wellrohres gemessen am Wellental. Dadurch können die Rippen an dem Arretierrücken und/oder den Arretierarmen auf einfache Art und Weise eine formschlüssige Verbindung zwischen diesem und dem Wellrohr in der Arretierposition bilden. Die Rippe ist vorzugsweise einstückig mit dem Arretierrücken und/oder einem Arretierarm verbunden, insbesondere einstückig daran angespritzt.

Gemäß einer weiteren bevorzugten Ausführungsform weisen der Arretierrücken und/oder der wenigstens eine Arretierarm zweite Formschlussmittel zum formschlüssigen Zusammenwirken mit korrespondierenden Formschlussmitteln an dem Grundkörper auf. Die zweiten Formschlussmittel sind vorzugsweise so ausgebildet, dass sie in der Arretierposition mit den Formschlussmitteln an dem Grundkörper in formschlüssigem Eingriff stehen. Dadurch ist es möglich, dass der Arretierrücken und/oder die Arretierarme in der Arretierposition sowohl mit dem Wellrohr als auch mit dem Grundkörper in formschlüssigem Eingriff stehen, wodurch das Wellrohr mittelbar formschlüssig mit dem Grundkörper verbunden ist. Hierdurch kann eine sichere und dauerhafte Verbindung des Wellrohres mit dem Grundkörper erreicht werden.

Die zweiten Formschlussmittel an dem Arretierrücken und/oder dem wenigstens einem Arretierarm sind vorzugsweise als Vorsprung ausgebildet, der dazu eingerichtet ist, in der Arretierposition in eine korrespondierende Ausnehmung an dem Grundkörper einzugreifen. Vorzugsweise sind auch die zweiten Formschlussmittel als Rippe ausgebildet, die in eine Nut an dem Grundkörper eingreifen. Die Rippen, die die zweiten Formschlussmittel bilden, verlaufen in der Arretierposition vorzugsweise im Wesentlichen in umfänglicher Richtung, so dass diese dazu angepasst sind, Axialkräfte von dem Grundkörper auf den Arretierrücken und/oder die Arretierarme oder umgekehrt zu übertragen.

In einer besonders bevorzugten Ausführungsform umfasst die Arretiereinheit eine Schließeinrichtung zum Verschließen der Arretiereinheit in der Arretierposition. Dadurch lässt sich die Arretiereinheit in der Arretierposition verschließen und so fixieren und gegen ungewolltes Verbringen von der Arretierposition in die geöffnete Position sichern. Dadurch ist dieser Dauerhaftigkeit der Verbindung zwischen Verbindungsvorrichtung und Wellrohr sowie auch von zwei mittels der Verbindungsvorrichtung verbundenen Rohren oder dergleichen verbessert.

Bevorzugt ist die Schließeinrichtung an dem freien Ende des wenigstens einen Arretierarmes zum Verschließen des Arretierarmes in der Arretierposition angeordnet. Dies ist eine besonders zweckmäßige Anordnung der Schließeinrichtung, die sowohl zu einer einfachen Montage als auch zu einer platzsparenden kompakten Bauform der Verbindungsvorrichtung führt.

In einer bevorzugten Ausführungsform, in der zwei Arretierarme vorgesehen sind, ist vorzugsweise an dem freien Ende des ersten Arretierarmes eine Rastnase vorgesehen und an dem freien Ende des zweiten Arretierarmes ein korrespondierendes Rastmittel, insbesondere ein Rastvorsprung oder eine Nut vorgesehen, derart, dass die Rastnase des ersten Arretierarmes in der Arretierposition gemeinsam mit dem Rastmittel des zweiten Arretierarmes eine Rastverbindung bildet. Die Rastnase und das korrespondierende Rastmittel bilden demnach gemeinsam die Schließeinrichtung zum Verschließen der Arretiereinheit in der Arretierposition. Eine Rastnase und ein korrespondierendes Rastmittel wie eine Rastausnehmung, Rastnut oder zweite Rastnase sind besonders einfache formschlüssige Mittel, um eine Fixierung der Arretierarme in der Arretierposition zu erreichen. Das Einrasten der Rastnase in das korrespondierende Rastmittel gibt einem Monteur sowohl habtisches als auch akustisches Feedback, wodurch die Montage weiterhin vereinfacht ist. Die Rastverbindung kann lösbar oder unlösbar ausgelegt sein. Bevorzugt ist auch eine separate Schließeinrichtung für den Arretierrücken.

Gemäß einer weiteren bevorzugten Ausführungsform sind der Grundkörper und die Arretiereinrichtung einstückig aus Kunststoff geformt. Vorzugsweise sind der Grundkörper und die Arretiereinheit mittels Spritzgießen einstückig aus Kunststoff geformt. Dadurch ist sowohl die Herstellung als auch die Montage wesentlich vereinfacht. Es ist nur ein Bauteil erforderlich, um ein Wellrohr mit einem zweiten Element, wie etwa einem Schlauch oder dergleichen zu verbinden. Zudem kann die Herstellung der Verbindungsvorrichtung in einem Schritt erfolgen. Dadurch werden auch die Kosten der Verbindungsvorrichtung weiter reduziert.

In einer bevorzugten Weiterbildung der Verbindungsvorrichtung ist die Öffnung in dem Grundkörper ein Durchgangsloch und die Anschlussvorrichtung weist einen Rohrstutzen zum Verbinden des Grundkörpers mit einem zweiten Rohr auf. Das Durchgangsloch ist vorzugsweise ausgelegt, eine fluidische Verbindung zwischen einem Wellrohr und einem zweiten Rohr, welche mit der Verbindungsvorrichtung verbunden werden, zu erlauben.

In einer ersten bevorzugten Alternative weist der Rohrstutzen ein Außengewinde auf. Ein solches Außengewinde dient dazu, dass ein zweites Rohr mittels eines herkömmlichen Rohrverbinders etwa mittels einer Überwurfmutter an der Verbindungsvorrichtung montierbar ist. Dadurch lässt sich mittels der Verbindungsvorrichtung gemäß dieser Ausführungsform ein Schlauch, der einen Schlauchverbinder mit Überwurfmutter aufweist, auf einfache Art und Weise mit einem Wellrohr verbinden. Alternativ ist der Rohrstutzen als Schlauchstutzen ausgebildet und weist auf seiner Außenseite Formschlussmittel auf. Solche Formschlussmittel wie Vorsprünge und dergleichen können dazu dienen, einen auf den Schlauchstutzen aufgeschobenen Schlauch in Verbindung mit einer Schlauchschelle, die äußerlich um den Schlauch angelegt und mit einer Spannung beaufschlagt wird, zu befestigen. So lässt sich mit der Verbindungsvorrichtung gemäß dieser Alternative ein Schlauch, etwa ein Gummischlauch, auf einfache Art und Weise mit einem Wellrohr verbinden.

Besonders bevorzugt ist die Anschlusseinrichtung einstückig mit dem Grundkörper ausgebildet. So lässt sich auch die Anschlusseinrichtung beispielsweise mittels Spritzgießen in einem Schritt herstellen. Dadurch sind die Herstellungskosten weiter reduziert.

In einer Alternative ist die Anschlusseinrichtung aus einem Metall gebildet und mit dem Grundkörper verbunden. Diese Alternative ist insbesondere dann bevorzugt, wenn die Anschlusseinrichtung einen Rohrstutzen mit einem Außengewinde aufweist und eine metallische Mutter verwendet werden soll, so dass die Haltbarkeit der Gewindeverbindung verbessert ist. Die Verbindung einer Anschlusseinrichtung aus Metall kann durch herkömmliche Mittel wie etwa Kleben oder dergleichen erfolgen oder die Anschlusseinrichtung wird als sogenanntes Insert beim Spritzgießen mit in den Grundkörper eingespritzt.

In einer weiteren bevorzugten Ausführungsform weist die Verbindungsvorrichtung eine erste Dichtung auf, die in der Öffnung innerlich an dem Grundkörper angeordnet ist, zum Abdichten des Grundkörpers gegenüber dem Wellrohr. Eine solche Dichtung ist besonders bevorzugt, wenn das Wellrohr nicht als Hülsrohr, sondern direkt medienführend verwendet wird. Die Dichtung ist vorzugsweise so ausgebildet, dass durch Einsetzen des Wellrohres in die Öffnung eine Dichtwirkung erzeugt wird. Die Dichtung kann als separate Dichteinlage eingesetzt werden oder beim Spritzgießen beispielsweise durch Zweikomponentenspritzguss einstückig mit dem Grundkörper verbunden sein.

Gemäß einer bevorzugten Weiterbildung ist ferner eine zweite Dichtung vorgesehen, die an dem Grundkörper zum Abdichten des Grundkörpers gegenüber einer mit der Anschlusseinrichtung verbundenen zweiten Einheit vorgesehen ist. Eine solche Dichtung ist bevorzugt, wenn die Verbindungsvorrichtung genutzt wird, um ein direkt fluidführendes Wellrohr mit einem Schlauch oder dergleichen zu verbinden. Vorzugsweise ist die zweite Dichtung ausgelegt sowohl axial als auch radial zu dichten.

In einer bevorzugten Weiterbildung sind die erste und zweite Dichtung gemeinsam einstückig ausgebildet. Beispielsweise kann sich die Dichtung vollständig durch die Öffnung hindurch erstrecken und als separates Teil ausgebildet sein. Alternativ wird die Dichtung direkt bei der Fertigung der Verbindungsvorrichtung im Zweikomponentenspritzguss mit eingespritzt. Hierdurch verringert sich wiederum die Teileanzahl und die Herstellungskosten werden reduziert.

In einer weiteren bevorzugten Ausgestaltung erstreckt sich die Dichtung vollständig durch die Öffnung des Grundkörpers hindurch und bildet eine Aufnahme für die Anschlusseinrichtung zum Kuppeln der Anschlusseinrichtung gegen den Grundkörper.

Die Anschlusseinrichtung nicht direkt einstückig mit dem Grundkörper hergestellt, sondern als separates Teil, beispielsweise aus Metall, bildet die Dichtung somit eine Halterung für die Anschlusseinrichtung. Auch hierdurch ist die Herstellung vereinfacht und Herstellungskosten werden reduziert.

Eine bevorzugte Ausführungsform der Erfindung wird anhand der beiliegenden Figuren erläutert. Es zeigen:
- Figur 1: eine perspektivische Ansicht einer Verbindungsvorrichtung in der geöffneten Position;
- Figur 2: eine Seitenansicht der Verbindungsvorrichtung aus Figur 1;
- Figur 3: einen Schnitt durch die Verbindungsvorrichtung gemäß Figuren 1 und 2;
- Figur 4: eine perspektivische Ansicht der Verbindungsvorrichtung aus den vorherigen Figuren in einer Zwischenposition zwischen geöffneter und arretierter Position;
- Figur 5: die Verbindungsvorrichtung aus den vorherigen Figuren in einer weiteren Zwischenposition zwischen geöffneter und arretierter Position;
- Figur 6: die Verbindungsvorrichtung aus Figur 5 mit einem Wellrohr, welches in die Öffnung eingesetzt ist;
- Figur 7: die Anordnung aus Figur 6, wobei das Wellrohr ausgerichtet ist;
- Figur 8: eine perspektivische Ansicht der Anordnung aus Figur 7, wobei die Verbindungsvorrichtung in einer weiteren Zwischenposition zwischen geöffneter und arretierter Position ist;
- Figur 9: die Anordnung aus Figur 8, wobei die Verbindungsvorrichtung in einer weiteren Zwischenposition zwischen geöffneter Position und arretierter Position ist;
- Figur 10: die Anordnung aus Figur 9, wobei die Verbindungsvorrichtung in einer weiteren Zwischenposition zwischen geöffneter und arretierter Position ist;
- Figur 11: die Anordnung aus Figur 10, wobei die Verbindungsvorrichtung in der arretierten Position ist;
- Figur 12: eine Draufsicht auf die Verbindungsvorrichtung in der arretierten Position; und
- Figur 13: einen Schnitt durch die Anordnung aus Figur 11.

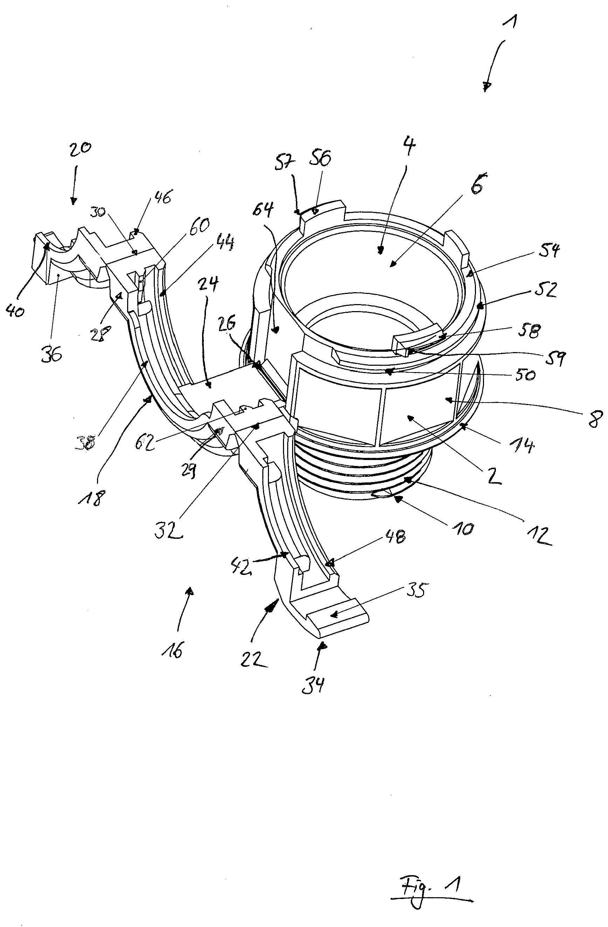

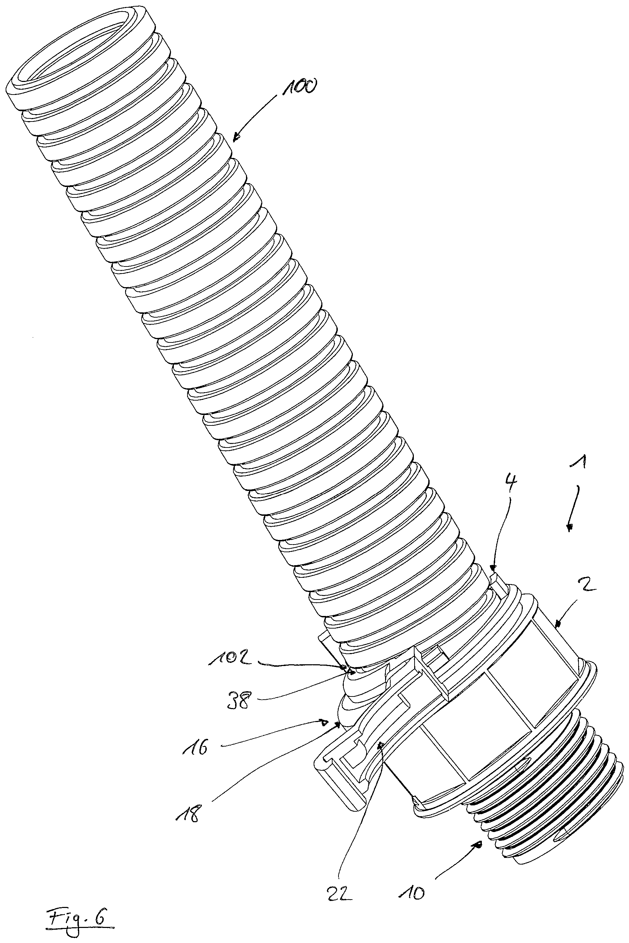

Figur 1 zeigt allgemeine eine Verbindungsvorrichtung 1, die zum Verbinden eines Wellrohres mit einer zweiten Einheit vorgesehen ist. Die Verbindungsvorrichtung 1 weist einen im Wesentlichen buchsenförmigen Grundkörper 2 auf, der eine Öffnung 4 zur Aufnahme des Wellrohres 100 hat (das Wellrohr ist in Figur 1 nicht gezeigt; siehe Figuren 6 bis 11, 13). Innerhalb der Öffnung 4 ist eine Dichtung 6 vorgesehen, die die innere Wandung des Grundkörpers 2 auskleidet und dazu vorgesehen ist, ein Wellrohr, welches in der Öffnung 4 aufgenommen ist, abzudichten. Der Grundkörper 2 ist an seiner äußeren Mantelfläche 8 mit einer Strukturierung, nämlich einem Außenachtkant versehen. Dieser dient dazu, die Verbindungsvorrichtung 1 bei der Montage besser ergreifen zu können.

Die Verbindungsvorrichtung 1 weist ferner eine mit dem Grundkörper verbundene Anschlusseinrichtung 10 zum Anschließen des Grundkörpers 2 an eine zweite Einheit auf (die zweite Einheit ist in den Figuren nicht gezeigt, sie kann etwa ein Schlauch oder dergleichen sein). Die Anschlusseinrichtung 10 ist gemäß diesem Ausführungsbeispiel als Rohrstutzen ausgeführt und weist ein Außengewinde 12 auf. In dem Übergangsbereich zwischen dem Grundkörper 2 und der Anschlusseinrichtung 10 ist zur stirnseitigen Abdichtung der zweiten Einheit eine weitere Dichtung 14 vorgesehen, die sich im Wesentlichen radial zwischen Grundkörper 2 und Anschlusseinrichtung 10 erstreckt.

Erfindungsgemäß weist die Verbindungsvorrichtung 1 gemäß diesem Ausführungsbeispiel ferner eine Arretiereinheit 16 zum Arretieren des Wellrohres in dem Grundkörper 2 auf, welche zwischen einer geöffneten Position, in der das Wellrohr von dem Grundkörper 2 entfernbar ist und einer arretierten Position, in der das Wellrohr an dem Grundkörper 2 arretiert ist, bewegbar ist. Die Arretiereinheit 16 ist erfindungsgemäß mit dem Grundkörper 2 verbunden.

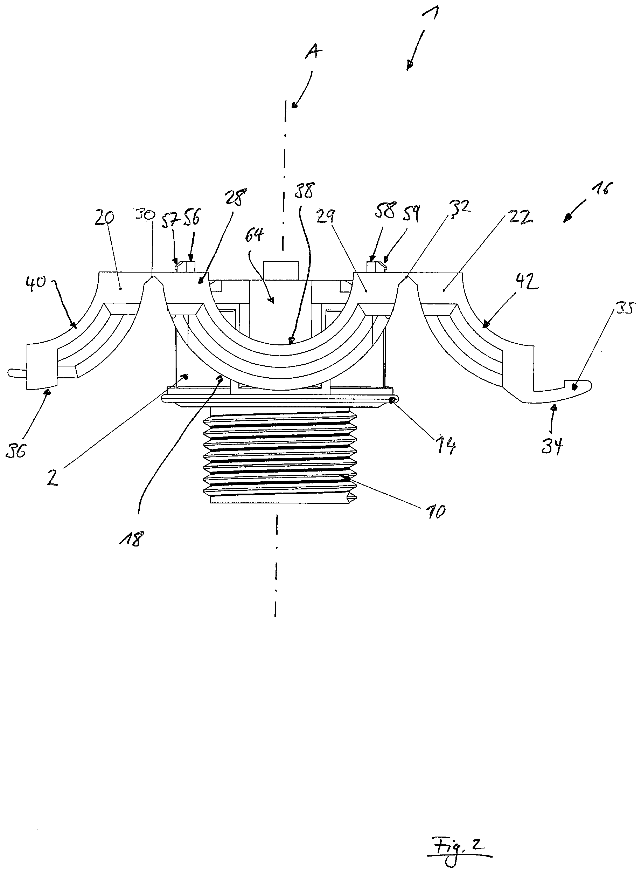

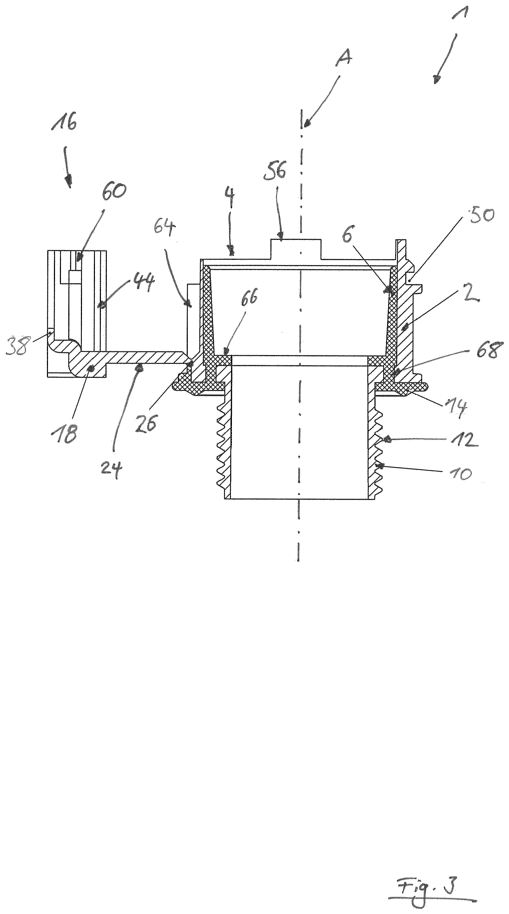

Die Arretiereinheit 16 (vgl. auch Figur 2) weist einen Arretierrücken 18 sowie zwei mit diesem verbundene Arretierarme 20, 22 auf. Der Arretierrücken hat eine im Wesentlichen halbringförmige Grundform. Der Arretierrücken 18 ist mit einem Steg 24 verbunden, welcher wiederum über ein Filmscharnier 26 mit dem Grundkörper 2 verbunden ist. Der Arretierrücken 18 ist starr und einstückig mit dem Steg 24 verbunden (siehe Figur 3). Über das Filmscharnier 26 sind der Arretierrücken 18 und der Steg 24 einstückig mit dem Grundkörper 2 verbunden.

Die beiden Halterarme 20, 22 weisen jeweils eine im Wesentlichen viertelringförmige Grundform auf und sind mit zwei freien Enden 28, 29 des Arretierrückens 18 verbunden. Sowohl der erste Arretierarm 20 als auch der zweite Arretierarm 22 sind mittels eines Filmscharniers 30, 32 mit dem Arretierrücken 18 verbunden. Dadurch können die Arretierarme 20, 22 einstückig mit dem Arretierrücken und somit auch mit dem Grundkörper 2 mittels Spritzgießen hergestellt werden. Der Steg 24 ist im Wesentlichen mittig mit dem Arretierrücken 18 verbunden, so dass die Arretiereinheit 16 insgesamt im Wesentlichen symmetrisch ausgebildet ist (vgl. auch Figur 2). Dadurch ist eine im Wesentlichen kompakte Bauform erreicht. Auch andere Konfigurationen, bei welchen der Steg 24 beispielsweise mit einem der Arretierarme 20, 22 verbunden ist, sind denkbar.

Das Filmscharnier 26 ist so gebildet, dass zumindest ein Verschwenken um 90° möglich ist, die Filmscharniere 30, 32 sind so gebildet, dass ein Verschwenken um 180° möglich ist.

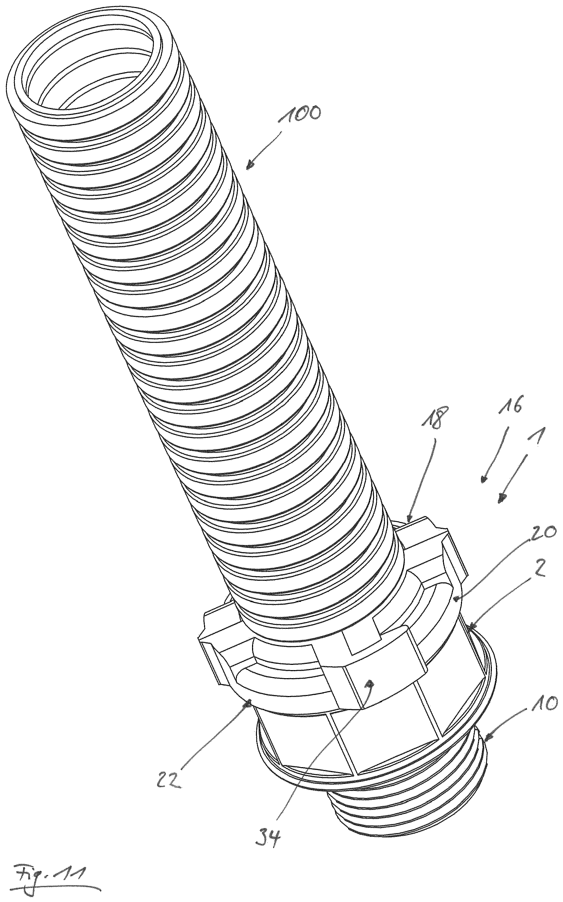

An den jeweils freien Enden der Arretierarme 20, 22 sind Rastmittel vorgesehen, die eine Verschließeinrichtung bilden. Von dem freien Ende des zweiten Arretierarms 22 erstreckt sich ein Rastarm 34 mit einer Rastnase 35, die dazu vorgesehen ist, einen entsprechenden Rastvorsprung 36 in der arretierten Position zu hintergreifen. Dadurch wird eine Fixierung der Arretierarme 20, 22 und des Arretierrückens 18 in der arretierten Position erreicht (vgl. insbesondere Figur 11).

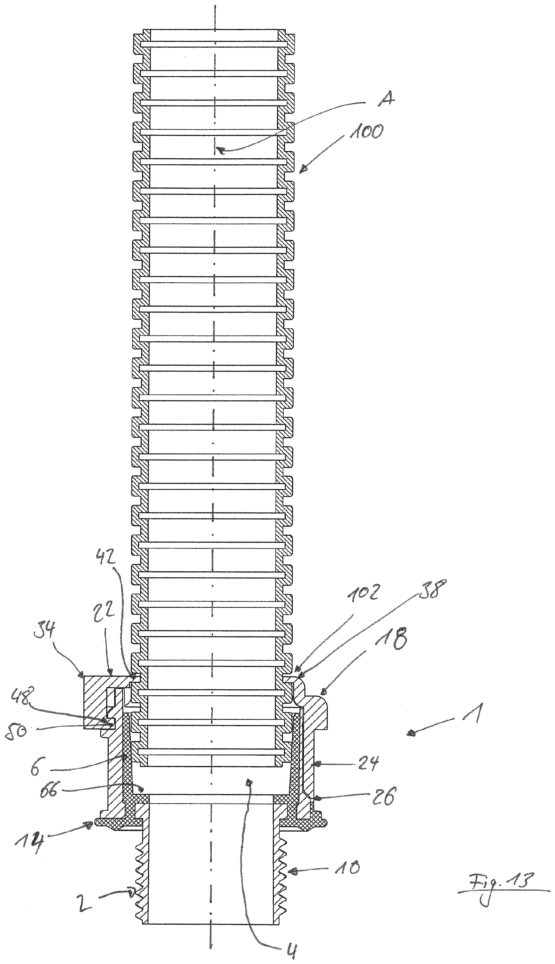

Wie weiterhin aus Figur 1 ersichtlich ist, weisen sowohl der Arretierrücken 18 als auch die Arretierarme 20, 22 jeweils erste Formschlussmittel in Form einer Rippe auf, nämlich weist der Arretierrücken 18 eine Rippe 38 auf, der Arretierarm 20 weist eine Rippe 40 auf und der Arretierarm 22 weist eine Rippe 42 auf. Die Rippen 38, 40, 42 sind am bezogen auf den Grundkörper 2 und die Zentralachse A (vgl. Figuren 2, 3 sowie insbesondere Figur 13) distalen Ende (oberes Ende) der Arretiereinheit 16 angeordnet. Die Rippen 38, 40, 42 sind jeweils entsprechend teilringförmig gebildet und korrespondieren mit den entsprechenden Grundkörpern von Arretierrücken 18 und den Arretierarmen 20, 22. Die Rippen 38, 40, 42 bilden in der arretierten Position (vgl. insbesondere Figur 13) einen Ring mit einem inneren Durchmesser, der kleiner ist als der äußere Durchmesser eines Wellrohres 100, gemessen an einem Wellenberg. Dadurch sind die Rippen 38, 40, 42 dazu angepasst, in der arretierten Position (siehe insbesondere Figur 13) formschlüssig von außen in Wellentäler 102 des Wellrohres 100 einzugreifen und dieses so formschlüssig mit dem Grundkörper 2 zu koppeln.

Neben den durch die Rippen 38, 40, 42 verkörperten ersten Formschlussmitteln weist die Arretiereinheit 16 zweite Formschlussmittel auf, die von zweiten Rippen gebildet werden: Der Arretierrücken 18 weist eine Rippe 44 auf, der Arretierarm 20 weist eine Rippe 46 auf und der Arretierarm 22 weist eine Rippe 48 auf. Diese Rippen 44, 46, 48 sind bezogen auf die Arretiereinheit 16 in der arretierten Position und die Zentralachse A, axial am proximalen, unteren Ende des Arretierrückens 18 und der Arretierarme 20, 22. Die Rippen 44, 46, 48 sind ebenfalls korrespondierend mit der Grundform von Arretierrücken 18 und den Arretierarmen 20, 22 und dementsprechend teilringförmig gebildet. Gemeinsam bilden die drei Rippen 44, 46, 48 wiederum einen im Wesentlichen geschlossenen Ring, der bei dem Arretierrücken 18 allerdings durch den Steg 24 durchbrochen wird (vgl. Figur 1). Dies hat jedoch keine nachteiligen Auswirkungen. Die drei Rippen 44, 46, 48 sind dazu angepasst, in eine Nut 50 einzugreifen, welche am oberen Ende (bezogen auf die Figuren) des Grundkörpers 2 ausgebildet ist. Die Rippen 44, 46, 48 greifen demnach derart in die Nut 50 ein, dass sie den Nut begrenzenden Vorsprung 52 hintergreifen und so eine axiale formschlüssige Sicherung der Arretiereinheit 16 an dem Grundkörper 2 erreichen. Dadurch wird das Filmscharnier 26 bei einer axialen Belastung der Verbindungsvorrichtung 1 in der arretierten Position nicht mit einer Kraft belastet.

Weiterhin Bezug nehmend auf Figur 1 sind an dem oberen Rand 54 des Grundkörpers 2 zwei Haken 56, 58 gezeigt. Diese Haken 56, 58 bilden einen hintergreifbaren Abschnitt, der von einer vorspringenden Wand 57, 59 gebildet wird. Hinter diesem hintergreifbaren Abschnitt greifen in der arretierten Position zwei Rastvorsprünge 60, 62 des Arretierrückens 18. Dadurch wird, wenn der Arretierrücken 18 in die arretierte Position geschwenkt wird, diese arretierte Position des Arretierrückens 18 verrastet und so fixiert. Die Verrastung kann lösbar oder unlösbar sein. Die Arretierarme 20, 22 sind dann immer noch beweglich, wie weiter unten mit Bezug auf die Figuren 6 bis 11 beschrieben werden wird.

Weiterhin Bezug nehmend auf Figur 1 ist eine Ausnehmung 64 an dem Grundkörper 2 vorgesehen. Diese Ausnehmung 64 hat im Wesentlichen eine mit dem Steg 24 korrespondierende Grundform, so dass der Steg 24 in der arretierten Position in diese Ausnehmung 64 eingreift und sich im Wesentlichen flächenbündig in den äußerlichen Umfang des Grundkörpers 2 einfügt (vgl. insbesondere Figuren 3 und 13).

Bezug nehmend auf Figur 3 sind die Dichtungen 6, 14 gut zu erkennen. Gemäß diesem Ausführungsbeispiel sind die Dichtungen 6, 14 einstückig ausgebildet und mittels Zweikomponentenspritzgießen mit dem Grundkörper 2 und der Anschlusseinrichtung 10 verbunden. Der Grundkörper 2 und die Anschlusseinrichtung 10 sind gemäß diesem Ausführungsbeispiel einstückig ausgebildet. Der Grundkörper 2, die Anschlusseinrichtung 10 sowie die Arretiereinheit 16 sind aus einem Kunststoff gebildet. Wie zu erkennen, erstreckt sich die Dichtung 6 an einer radial inneren Oberfläche des Grundkörpers 2 innerhalb der Öffnung 4. Dabei nimmt die Dicke der Dichtung 6 in die Öffnung 4 hinein zu, so dass der innere freie Durchmesser der Dichtung 6 entlang der Zentralachse A (bezogen auf Figur 3 von oben nach unten) leicht kegelstumpfförmig zuläuft. Dadurch wird erreicht, dass bei Einführen eines Wellrohres in die Öffnung 4 dieses in Kontakt mit der Dichtung 6 kommt und beispielsweise händisch hineingedrückt werden kann, um so eine gute Abdichtung zu erreichen. In einem unteren Abschnitt weist die Dichtung 6 einen nach innen radial vorspringenden Absatz 66 auf. Dieser dient als Anschlag für das Wellrohr. Die Dichtung 6 für das Wellrohr ist über mehrere Verbindungskanäle 68, die in dem Grundkörper 2 vorgesehen sind, mit der Dichtung 14 verbunden. Dadurch lässt sich die Dichtung 6 und 14 einstückig mittels Spritzgießen im Zweikomponentenspritzgussverfahren erzeugen. Die Dichtung 14 erstreckt sich radial unterhalb des Grundkörpers 2 im Bereich der Anschlusseinrichtung 10. Die Dichtung 14 dient dazu, eine beispielsweise über das Gewinde 12 der Anschlusseinrichtung 10 geschraubte Überwurfmutter axial abzudichten. Dadurch lässt sich eine im Wesentlichen fluiddichte Verbindung zwischen einem Wellrohr und einem Schlauch mittels der Verbindungsvorrichtung 1 erzeugen.

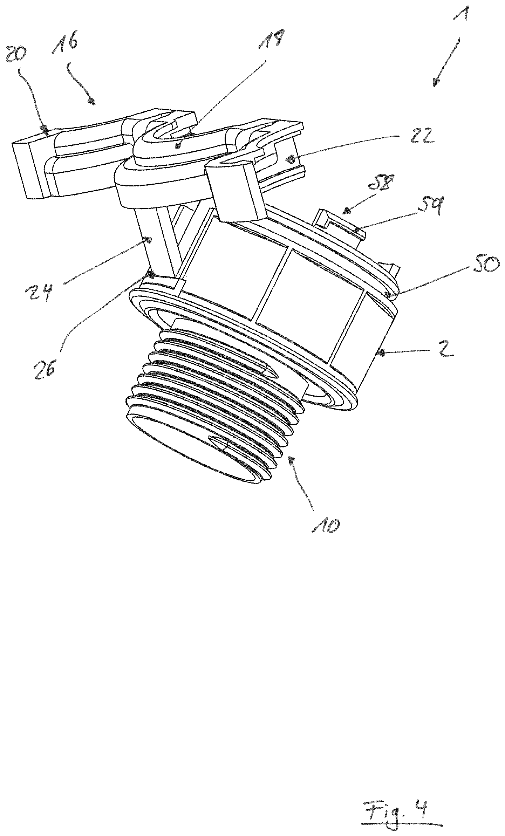

Die Funktion und Montage der Verbindungsvorrichtung 1 gemäß der vorliegenden Erfindung wird nun mit Bezug auf die Figuren 4 bis 13 näher erläutert werden.

Bei der Montage wird zunächst die Arretiereinheit 16 von der geöffneten Position (siehe Figuren 1 bis 3) mittels des Filmscharniers 26 verschwenkt und so in einer Zwischenposition zwischen geöffneter Position und arretierter Position gebracht. Dabei wird der Steg 24 aus der geöffneten Position (vgl. Figuren 1 bis 3), in welcher er sich im Wesentlichen senkrecht zur Zentralachse A erstreckt, bezogen auf Figur 3 nach oben verschwenkt, sodass er sich im Wesentlichen parallel zur Zentralachse A erstreckt, wie dies in Figur 4 dargestellt ist. Die beiden Arretierarme 20, 22 bleiben in ihrer Ursprungsposition.

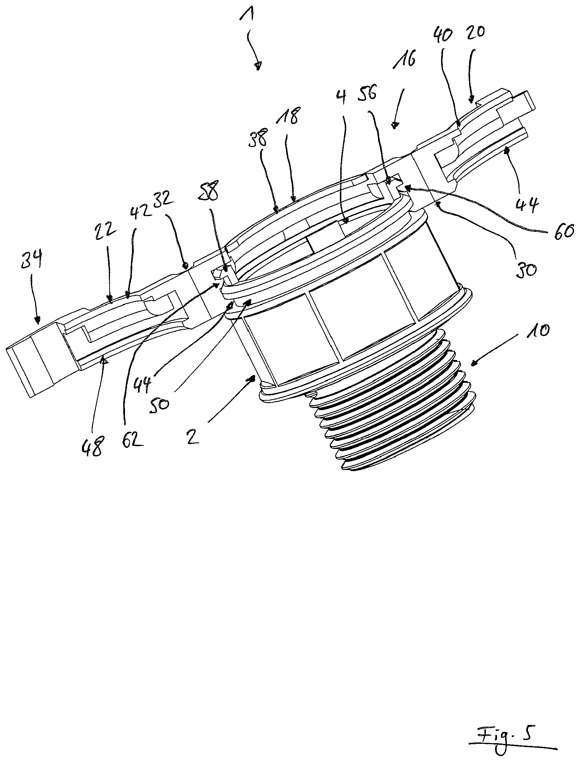

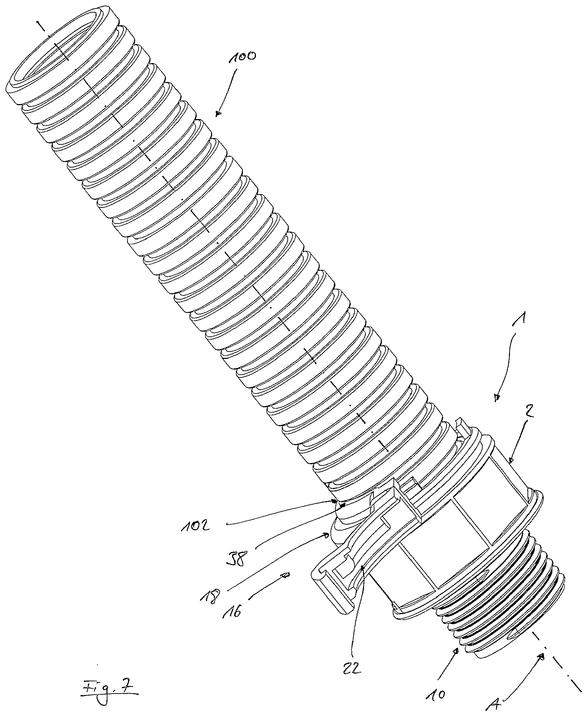

Die Arretiereinheit 16 wird dann weiter verschwenkt, bis die Zwischenposition, wie sie in Figur 5 dargestellt ist, erreicht wird. In dieser Zwischenposition befindet sich der Steg 24 vollständig in der Ausnehmung 64 und die beiden Rastvorsprünge 60, 62 des Arretierrückens 18 sind in die Haken 56, 58 eingerastet. Dadurch wird die Zwischenposition gemäß Figur 5 temporär oder dauerhaft fixiert. In dieser Position (Figur 5) kann nun das Wellrohr 100 in die Öffnung 4 der Verbindungsvorrichtung 1 eingeführt werden, bzw. die Verbindungsvorrichtung 1 kann mit der Öffnung 4 auf das Wellrohr 100 aufgesteckt werden, je nach Konfiguration der örtlichen Gegebenheiten. Dies ist in Figur 6 dargestellt. Dabei muss das Wellrohr 100, da sich die Arretiereinheit 16 in einer Zwischenposition befindet, in der der Arretierrücken 18 bereits in der arretierten Position ist, die Arretierarme 20, 22 jedoch noch nicht, leicht schräg zur Zentralachse A eingeführt werden, so dass dieses an der Rippe 38 des Arretierrückens 18 vorbeigeführt werden kann (vgl. Figur 6). Das Wellrohr 100 wird dabei so in die Öffnung 4 eingeführt, dass ein Wellental 102 formschlüssig mit der Rippe 38 zusammenwirkt, also die Rippe 38 in das Wellental 102 eingreift und das Wellrohr 100 im Wesentlichen koaxial mit der Zentralachse A ausgerichtet werden kann. Der ausgerichtete Zustand ist in Figur 7 dargestellt. In Figur 7 ist die Arretiereinheit 16 immer noch in derselben Zwischenposition, wie in den Figuren 5 bis 6 dargestellt, allerdings ist bereits die Rippe 38 in formschlüssigem Eingriff mit dem Wellrohr 100. Die Arretierung zwischen den Rastvorsprüngen 60, 62 und den Haken 56, 58 führt hier dazu, dass die Montage vereinfacht ist, da das Wellrohr 100 bereits eine gewisse Halterung in der Öffnung 4 der Verbindungsvorrichtung 1 erfährt und sich nicht selbsttätig, aufgrund der elastischen Kräfte des Filmscharniers 26, wieder in die geöffnete Position bewegt. Dies vereinfacht deutlich die Montage.

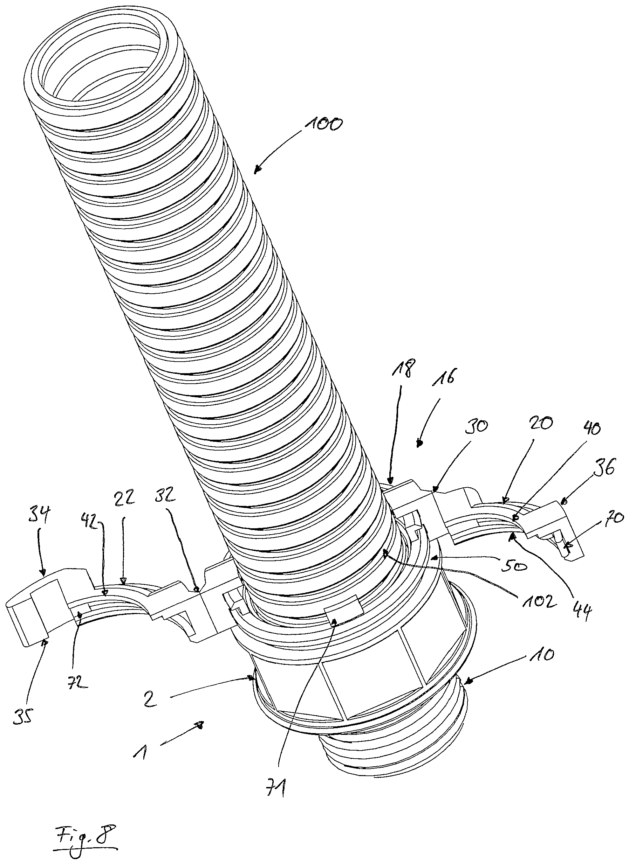

Ausgehend von dieser Position (Figur 7) werden nun die Rastarme 20, 22 ebenfalls in die arretierte Position verbracht. Dies ist in den Figuren 8 bis 11 dargestellt. Dazu wird zunächst der erste Arretierarm 20 mittels des Filmscharniers 30 verschwenkt (vgl. Figur 8), bis dieser das Wellrohr 100 wenigstens teilweise umgreift und die Rippe 40 ebenfalls in das Wellental 102 eingreift. Gleichzeitig greift dann die Rippe 44 des ersten Rastarmes 20 in die Nut 50 an dem Grundkörper 2. Der Rastarm 20 weist gemäß diesem Ausführungsbeispiel zusätzlich eine Zunge 70 auf, die in Kontakt mit einem Vorsprung 71 an dem Grundkörper 2 kommt und in eine entsprechende Ausnehmung 72 an dem Rastarm 22 eingreifen kann. Dadurch werden die Rastarme 20, 22 noch besser in ihrer relativen Position zueinander definiert.

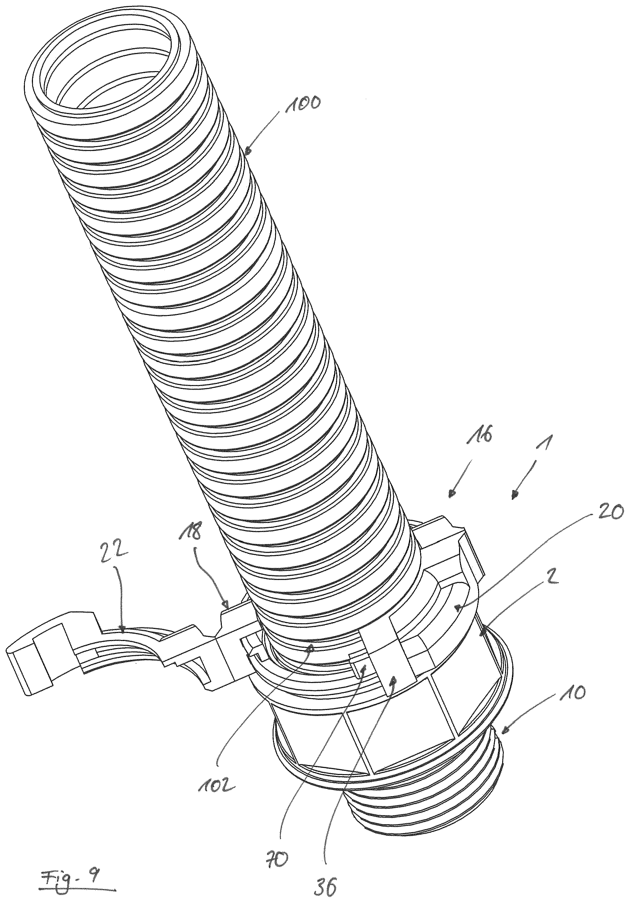

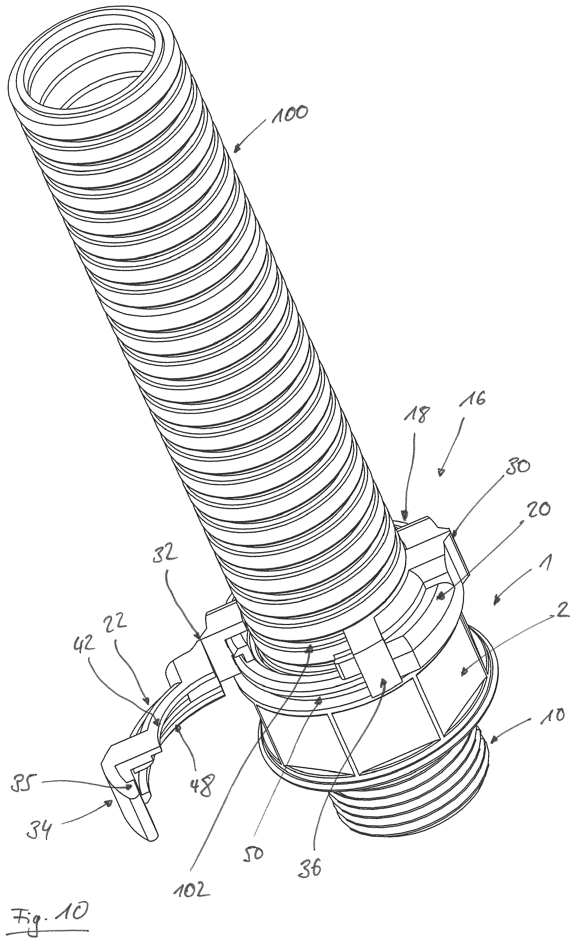

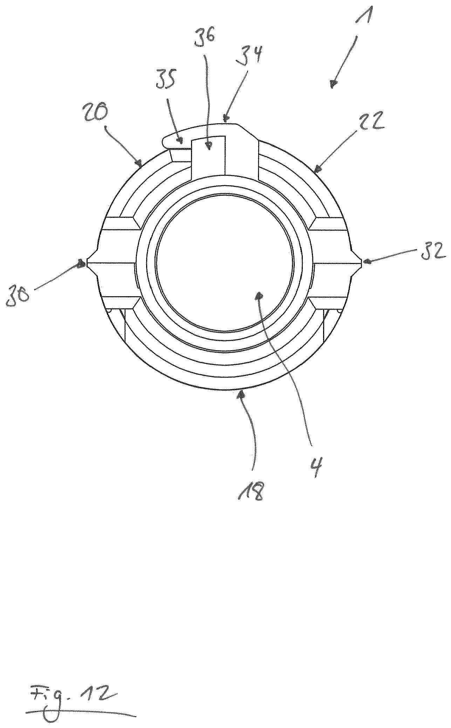

Ausgehend von dieser Position (Figur 9) wird nun der zweite Rastarm 22 verschwenkt, um die Arretiereinheit 16 insgesamt in die arretierte Position zu verbringen. In Figur 10 ist der zweite Rastarm 22 teilweise verschwenkt, in Figur 11 schließlich die arretierte Position erreicht. Der zweite Arretierarm 22 wird mittels des Filmscharniers 32 so weit verschwenkt, bis er das Wellrohr 100 wenigstens teilweise umgreift und gemäß diesem Ausführungsbeispiel die Rastnase 35 des Rasthakens 34 den Vorsprung 36 hintergreift und dort einrastet. Dabei greift die Rippe 42 in dasselbe Wellental 102 ein, wie die Rippe 38 und die Rippe 40 und die Rippe 48 des zweiten Rastarmes 22 greift in die Nut 50 an den Grundkörper 2 ein. Dadurch bilden die drei Elemente, der Arretierrücken 18, der Arretierarm 20 und der Arretierarm 22 jeweils eine formschlüssige Verbindung mit dem Wellrohr 100 und dem Grundkörper 2, wobei insbesondere das Filmscharnier 26 im Wesentlichen kraftfrei ist. Die drei Elemente, der Arretierrücken 18 und die Arretierarme 20, 22 bilden eine Art Klammer für das Wellrohr 100 und den Grundkörper 2, indem sie sowohl einen Wellenberg, der benachbart zum Wellenteil 102 ist, axial hintergreifen als auch den Rand 52, der die Nut 50 an dem Grundkörper 2 begrenzt, axial hintergreifen. Gesichert wird diese Position durch die Verschließeinrichtung, die durch den Rastarm 34 samt Rastnase 35 und dem Rastvorsprung 36 gebildet wird, sowie die einstückige Verbindung der Arretierarme 20, 22 mit dem Arretierrücken 18 und die Rastverbindung zwischen den Haken 56, 58 und den Rastvorsprüngen 60, 62 des Arretierrückens 18. Diese Position ist in Figur 11 dargestellt. In der Draufsicht ergibt sich eine Konfiguration, die in Figur 12 dargestellt ist. Wie ersichtlich, ist die Bauform der Verbindungsvorrichtung 1 sehr kompakt, so dass sich diese auch dazu eignet, in Wanddurchbrüchen und dergleichen eingesetzt zu werden.

Figur 13 zeigt nochmals einen Längsschnitt durch die Verbindungsvorrichtung 1 mit einem in der Öffnung 4 aufgenommenen Wellrohr 100. Die Verbindungsvorrichtung 1 ist in der arretierten Position und gemäß Figur 13 ist die Rippe 38 des Arretierrückens 18 in formschlüssigem Eingriff mit dem Wellental 102, und die Rippe 42 des Arretierarmes 22 in formschlüssigem Eingriff mit dem Wellental 102. Wie aus Figur 13 ersichtlich, reicht das Wellrohr 100 nicht bis zum Anschlag 66, sondern kommt bereits vorher mit einer radial äußeren Oberfläche in Kontakt mit der Dichtung 6, welche einen kegelstumpfförmigen Querschnitt hat (vgl. oben mit Bezug auf Figur 3 beschrieben). Es ist eine formschlüssige Verbindung der Verbindungsvorrichtung 1 an dem Wellrohr 100 erreicht, bei gleichzeitiger fluiddichter Abdichtung. Nun ist es möglich, auf die Anschlusseinrichtung 10, welche gemäß dem Ausführungsbeispiel im Außengewinde 12 versehen ist, einen Schlauch mittels eines Schlauchverbinders mit Überwurfmutter oder dergleichen aufzuschrauben. So ist eine besonders einfache und fluiddichte Kopplung zwischen einem Wellrohr und einem Schlauch erreicht.

## Patentansprüche

1. Verbindungsvorrichtung (1) zum Verbinden eines Wellrohres (100) mit einer zweiten Einheit, mit
einem im Wesentlichen buchsenförmigen Grundkörper (2), der eine Öffnung (4) zur Aufnahme des Wellrohres (100) hat,
und einer mit dem Grundkörper (2) verbundenen Anschlusseinrichtung (10) zum Anschließen des Grundkörpers (2) an die zweite Einheit, und
einer mit dem Grundkörper (2) verbundenen Arretiereinheit (16) zum Arretieren des Wellrohres (100) in dem Grundkörper (2),
wobei die Arretiereinheit (16) zwischen einer geöffneten Position, in der das Wellrohr (100) von dem Grundkörper (2) entfernbar ist, und einer arretierten Position, in der das Wellrohr (100) an dem Grundkörper (2) arretiert ist, bewegbar ist,
**dadurch gekennzeichnet, dass** die Arretiereinheit (16) mit einem schwenkbaren Steg (24) mit dem Grundkörper (2) verbunden ist und die Arretiereinheit (16) wenigstens einen starren Arretierrücken (18) und wenigstens einen beweglich an dem Arretierrücken (18) angeordneten Arretierarm (20, 22) aufweist, und der Arretierrücken (18) starr mit dem Steg (24) verbunden ist und zwischen einer geöffneten Position und einer arretierten Position bewegbar ist, wobei sich der Steg (24) in der Arretierposition im Wesentlichen parallel zu einer Zentralachse (A) des Grundkörpers (2) erstreckt.

2. Verbindungsvorrichtung nach Anspruch 1, wobei die Arretiereinheit (16) einstückig mit dem Grundkörper (2) verbunden ist, insbesondere durch ein Filmscharnier (26) mit dem Grundkörper (2) verbunden ist.

3. Verbindungsvorrichtung nach einem der vorstehenden Ansprüche, wobei an dem Arretierrücken (18) zwei gegenüberliegende Arretierarme (20, 22) angeordnet sind.

4. Verbindungsvorrichtung nach einem der vorstehenden Ansprüche, wobei die Arretiereinheit (16) wenigstens ein erstes Formschlusselement (38, 40, 42) aufweist, welches dazu vorgesehen ist, in der Arretierposition der Arretiereinheit (16) in formschlüssigem Eingriff mit dem Wellrohr (100) zu stehen, zum Arretieren des Wellrohres (100) an dem Grundkörper (2), wobei das wenigstens eine erste Formschlusselement (38, 40, 42) vorzugsweise
- an dem Arretierrücken (18) und/oder an dem wenigstens einen Arretierarm (20, 22) angeordnet ist, und/oder
- ein Vorsprung, insbesondere eine Rippe (38, 40, 42) ist, die dazu vorgesehen ist, in ein äußeres Wellental (102) des Wellrohres (100) formschlüssig einzugreifen.

5. Verbindungsvorrichtung nach Anspruch 3 oder 4, wobei der wenigstens eine Arretierarm (20, 22) einstückig, insbesondere durch ein Filmscharnier (30, 32), mit dem Arretierrücken (18) verbunden ist.

6. Verbindungsvorrichtung nach Anspruch 3 oder 4, wobei der Arretierrücken (18) und/oder der wenigstens eine Arretierarm (20, 22) dazu angepasst ist/sind, in der Arretierposition das Wellrohr (100) wenigstens abschnittsweise zu umgreifen, wobei vorzugsweise
- der Arretierrücken (18) und/oder der wenigstens eine Arretierarm (20, 22) eine im Wesentlichen teilringförmige Grundform aufweist/aufweisen, oder
- der Arretierrücken (18) im wesentlichen halbringförmig ist und zwei Arretierarme (20, 22) vorgesehen sind, die jeweils im Wesentlichen viertelringförmig sind, so dass sie gemeinsam in Arretierposition das Wellrohr (100) im Wesentlichen vollständig umgreifen.

7. Verbindungsvorrichtung nach einem der Ansprüche 3-6, wobei der Arretierrücken (18) und/oder der wenigstens eine Arretierarm (20, 22) zweite Formschlussmittel (44, 46, 48) aufweist/aufweisen zum formschlüssigen Zusammenwirken mit korrespondieren Formschlussmitteln (50) an dem Grundkörper (2), wobei die zweiten Formschlussmittel (44, 46, 48) vorzugsweise an dem Arretierrücken (18) und/oder dem wenigstens einen Arretierarm (20, 22) als Vorsprung ausgebildet sind, der dazu eingerichtet ist, in der Arretierposition in eine korrespondierende Ausnehmung (50) an dem Grundkörper (2) einzugreifen.

8. Verbindungsvorrichtung nach einem der vorstehenden Ansprüche, wobei die Arretiereinheit (16) eine Schließeinrichtung (34, 35, 36) zum Verschließen der Arretiereinheit (16) in der Arretierposition umfasst, wobei die Schließeinrichtung (34, 35, 36) vorzugsweise an dem freien Ende des wenigstens einen Arretierarms (20, 22) zum Verschließen des Arretierarms (20, 22) in der Arretierposition angeordnet ist.

9. Verbindungsvorrichtung nach Anspruch 8, wobei zwei Arretierarme (20, 22) vorgesehen sind, wobei an dem freien Ende des ersten Arretierarmes (20, 22) eine Rastnase (35) vorgesehen ist und an dem freien Ende des zweiten Arretierarmes (20, 22) ein korrespondierendes Rastmittel (36), insbesondere ein Rastvorsprung vorgesehen ist, derart, dass die Rastnase (35) des ersten Arretierarms (20, 22) in der Arretierposition gemeinsam mit dem Rastmittel (36) des zweiten Arretierarms (20, 22) eine Rastverbindung bildet.

10. Verbindungsvorrichtung nach einem der vorstehenden Ansprüche, wobei der Grundkörper (2) und die Arretiereinheit (16) einstückig aus Kunststoff geformt sind.

11. Verbindungsvorrichtung nach einem der vorstehenden Ansprüche, wobei die Öffnung (4) in dem Grundkörper (2) ein Durchgangsloch ist und die Anschlusseinrichtung (10) einen Rohrstutzen zum Verbinden des Grundkörpers (2) mit einem zweiten Rohr aufweist, wobei der Rohrstutzen vorzugsweise
- ein Außengewinde (12) aufweist, oder
- als Schlauchstutzen ausgebildet ist und auf seiner Außenseite Formschlussmittel aufweist.

12. Verbindungsvorrichtung nach einem der vorstehenden Ansprüche, wobei die Anschlusseinrichtung (10)
- einstückig mit dem Grundkörper (2) ausgebildet ist, und/oder
- aus einem Metall gebildet ist und mit dem Grundkörper (2) verbunden ist.

13. Verbindungsvorrichtung nach einem der vorstehenden Ansprüche, mit einer ersten Dichtung (6), die in der Öffnung (4) innerlich an dem Grundkörper (2) angeordnet ist, zum Abdichten des Grundkörpers (2) gegenüber dem Wellrohr (100) und/oder mit einer zweiten Dichtung (14), die an dem Grundkörper (2) vorgesehen ist zum Abdichten des Grundkörpers (2) gegenüber einer mit der Anschlusseinrichtung (10) verbundenen zweiten Einheit, wobei vorzugsweise die erste und zweite Dichtung (6, 14) gemeinsam einstückig ausgebildet sind.

14. Verbindungsvorrichtung nach Anspruch 13, wobei sich die Dichtung (6, 14) vollständig durch die Öffnung (4) des Grundkörpers (2) hindurch erstreckt und eine Aufnahme für die Anschlusseinrichtung (10) zum Koppeln der Anschlusseinrichtung (10) gegen den Grundkörper (2) bildet.

## Claims

1. Connecting device (1) for connecting a corrugated pipe (100) to a second unit, comprising
a substantially socket-shaped main body (2) having an orifice (4) for accommodating the corrugated pipe (100),
and a connector fitting (10) connected to the main body (2) for connecting the main body (2) to the second unit, and
a locking unit (16) connected to the main body (2) for locking the corrugated pipe (100) in the main body (2),
which locking unit (16) can be moved between an open position in which the corrugated pipe (100) can be removed from the main body (2) and a locked position in which the corrugated pipe (100) is locked on the main body (2),
**characterised in that** the locking unit (16) is connected to the main body (2) by a pivotable web (24) and the locking unit (16) comprises at least one rigid lock back-piece (18) and at least one locking arm (20, 22) disposed on the lock back-piece (18) so as to be displaceable, and the lock back-piece (18) is rigidly connected to the web (24) and can be moved between an open position and a locked position, and the web (24) extends substantially parallel with a central axis (A) of the main body (2) in the locked position.

2. Connecting device as claimed in claim 1, wherein the locking unit (16) is integrally joined to the main body (2), in particular is joined to the main body (2) by means of a film hinge (26).

3. Connecting device as claimed in one of the preceding claims, wherein two oppositely lying locking arms (20, 22) are disposed on the lock back-piece (18).

4. Connecting device as claimed in one of the preceding claims, wherein the locking unit (16) has at least one first form-fitting element (38, 40, 42) which is provided as a means of establishing a form-fitting engagement with the corrugated pipe (100) when the locking unit (16) is in the locked position in order to lock the corrugated pipe (100) on the main body (2), and the at least one first form-fitting element (38, 40, 42) is preferably
- disposed on the lock back-piece (18) and/or on the at least one locking arm (20, 22), and/or
- is a projection, in particular a rib (38, 40, 42), which is provided as a means of engaging in an external trough (102) of the corrugated pipe (100) in a form-fitting arrangement.

5. Connecting device as claimed in claim 3 or 4, wherein the at least one locking arm (20, 22) is integrally joined to the lock back-piece (18), in particular by means of a film hinge (30, 32).

6. Connecting device as claimed in claim 3 or 4, wherein the lock back-piece (18) and/or the at least one locking arm (20, 22) is/are adapted to locate around at least a part of the corrugated pipe (100) in the locked position, and preferably
- the lock back-piece (18) and/or the at least one locking arm (20, 22) has/have a main shape substantially in the form of a part-ring or
- the lock back-piece (18) is substantially of a half-ring shape and two locking arms (20, 22) are provided, each of which is of a substantially quarter-ring shape so that, together, they locate substantially completely around the corrugated pipe (100) in the locked position.

7. Connecting device as claimed in one of claims 3-6, wherein the lock back-piece (18) and/or the at least one locking arm (20, 22) has/have second form-fitting means (44, 46, 48) for co-operating with complementary form-fitting means (50) on the main body (2) in a form-fitting arrangement, and the second form-fitting means (44, 46, 48) are preferably provided on the lock back-piece (18) and/or on the at least one locking arm (20, 22) in the form of a projection which is designed to locate in a complementary recess (50) on the main body (2) in the locked position.

8. Connecting device as claimed in one of the preceding claims, wherein the locking unit (16) comprises a closure device (34, 35, 36) for closing the locking unit (16) in the locked position, and the closure device (34, 35, 36) is preferably disposed on the free end of the at least one locking arm (20, 22) for closing the locking arm (20, 22) in the locked position.

9. Connecting device as claimed in claim 8, wherein two locking arms (20, 22) are provided, and a catch lug (35) is provided on the free end of the first locking arm (20, 22) and a complementary catch means (36) is provided on the free end of the second locking arm (20, 22), in particular a catch projection, in such a way that the catch lug (35) of the first locking arm (20, 22) forms a catch connection in conjunction with the catch means (36) of the second locking arm (20, 22) in the locked position.

10. Connecting device as claimed in one of the preceding claims, wherein the main body (2) and the locking unit (16) are made integrally from plastic.

11. Connecting device as claimed in one of the preceding claims, wherein the orifice (4) in the main body (2) is a through-hole and the connector fitting (10) has a pipe fitting for connecting the main body (2) to a second pipe, which pipe fitting preferably
- has an external thread (12) or
- is provided in the form of a hose fitting and has form-fitting means on its external face.

12. Connecting device as claimed in one of the preceding claims, wherein the connector fitting (10)
- is of an integral design with the main body (2) and/or
- is made from metal and is connected to the main body (2).

13. Connecting device as claimed in one of the preceding claims, having a first seal (6) disposed in the orifice (4) on the inside of the main body (2) in order to seal the main body (2) from the corrugated pipe (100) and/or having a second seal (14) provided on the main body (2) for sealing the main body (2) from a second unit connected to the connector fitting (10), and the first and second seal (6, 14) are preferably of a jointly integral design.

14. Connecting device as claimed in claim 13, wherein the seal (6, 14) extends completely through the orifice (4) of the main body (2) and forms a seat for the connector fitting (10) for coupling the connector fitting (10) on the main body (2).

## Revendications

1. Dispositif de liaison (1) pour la liaison d'un tube ondulé (100) avec une seconde unité, avec
un corps de base (2) sensiblement en forme de douille qui a une ouverture (4) pour la réception du tube ondulé (100),
et un dispositif de raccordement (10) relié au corps de base (2) pour le raccordement du corps de base (2) à la seconde unité et
une unité d'arrêt (16) reliée au corps de base (2) pour l'arrêt du tube ondulé (100) dans le corps de base (2),
dans lequel l'unité d'arrêt (16) est mobile entre une position ouverte, dans laquelle le tube ondulé (100) est retirable du corps de base (2), et une position arrêtée, dans laquelle le tube ondulé (100) est arrêté sur le corps de base (2),
**caractérisé en ce que** l'unité d'arrêt (16) est reliée avec une nervure (24) pivotante au corps de base (2) et l'unité d'arrêt (16) présente au moins un dos d'arrêt (18) rigide et au moins un bras d'arrêt (20, 22) agencé de manière mobile sur le dos d'arrêt (18), et le dos d'arrêt (18) est relié rigidement à la nervure (24) et est mobile entre une position ouverte et une position arrêtée, dans lequel la nervure (24) s'étend dans la position d'arrêt sensiblement parallèlement à un axe central (A) du corps de base (2).

2. Dispositif de liaison selon la revendication 1, dans lequel l'unité d'arrêt (16) est reliée d'un seul tenant au corps de base (2), en particulier par une charnière à film (26) au corps de base (2).

3. Dispositif de liaison selon l'une quelconque des revendications précédentes, dans lequel deux bras d'arrêt (20, 22) en regard sont agencés sur le dos d'arrêt (18).

4. Dispositif de liaison selon l'une quelconque des revendications précédentes, dans lequel l'unité d'arrêt (16) présente au moins un premier élément à complémentarité de formes (38, 40, 42) qui est prévu afin d'être dans la position d'arrêt de l'unité d'arrêt (16) en mise en prise par complémentarité de formes avec le tube ondulé (100), pour l'arrêt du tube ondulé (100) sur le corps de base (2), dans lequel l'au moins un premier élément à complémentarité de formes (38, 40, 42) de préférence
- est agencé sur le dos d'arrêt (18) et/ou sur l'au moins un bras d'arrêt (20, 22) et/ou
- est une saillie, en particulier une arête (38, 40, 42) qui est prévue afin de venir en prise par complémentarité de formes avec un creux d'onde extérieur (102) du tube ondulé (100).

5. Dispositif de liaison selon la revendication 3 ou 4, dans lequel l'au moins un bras d'arrêt (20, 22) est relié d'un seul tenant, en particulier par une charnière à film (30, 32) au dos d'arrêt (18).

6. Dispositif de liaison selon la revendication 3 ou 4, dans lequel le dos d'arrêt (18) et/ou l'au moins un bras d'arrêt (20, 22) est/sont adaptés afin d'entourer au moins par endroits dans la position d'arrêt le tube ondulé (100), dans lequel de préférence
- le dos d'arrêt (18) et/ou l'au moins un bras d'arrêt (20, 22) présente/présentent une forme de base sensiblement en forme d'anneau partiel ou
- le dos d'arrêt (18) est sensiblement en forme de demi-anneau et deux bras d'arrêt (20, 22) sont prévus, lesquels sont respectivement sensiblement en forme de quart d'anneau de sorte qu'ils entourent sensiblement complètement, conjointement en position d'arrêt le tube ondulé (100).

7. Dispositif de liaison selon l'une quelconque des revendications 3 à 6, dans lequel le dos d'arrêt (18) et/ou l'au moins un bras d'arrêt (20, 22) présente/présentent deux moyens à complémentarité de formes (44, 46, 48) pour la coopération à complémentarité de formes avec des moyens à complémentarité de formes correspondants (50) sur le corps de base (2), dans lequel les seconds moyens à complémentarité de formes (44, 46, 48) sont réalisés de préférence sur le dos d'arrêt (18) et/ou l'au moins un bras d'arrêt (20, 22) comme saillie qui est aménagé afin de venir en prise dans la position d'arrêt avec un évidement correspondant (50) sur le corps de base (2).

8. Dispositif de liaison selon l'une quelconque des revendications précédentes, dans lequel l'unité d'arrêt (16) comporte un dispositif de fermeture (34, 35, 36) pour la fermeture de l'unité d'arrêt (16) dans la position d'arrêt, dans lequel le dispositif de fermeture (34, 35, 36) est agencé de préférence sur l'extrémité libre de l'au moins un bras d'arrêt (20, 22) pour la fermeture du bras d'arrêt (20, 22) dans la position d'arrêt.

9. Dispositif de liaison selon la revendication 8, dans lequel deux bras d'arrêt (20, 22) sont prévus, dans lequel sur l'extrémité libre du premier bras d'arrêt (20, 22), un nez d'encliquetage (35) est prévu et sur l'extrémité libre du second bras d'arrêt (20, 22) est prévu un moyen d'encliquetage correspondant (36), en particulier une saillie d'encliquetage de telle manière que le nez d'encliquetage (35) du premier bras d'arrêt (20, 22) forme une liaison d'encliquetage dans la position d'arrêt conjointement avec le moyen d'encliquetage (36) du second bras d'arrêt (20, 22).

10. Dispositif de liaison selon l'une quelconque des revendications précédentes, dans lequel le corps de base (2) et l'unité d'arrêt (16) sont formés d'un seul tenant en matière plastique.

11. Dispositif de liaison selon l'une quelconque des revendications précédentes, dans lequel l'ouverture (4) est un trou débouchant dans le corps de base (2) et le dispositif de raccordement (10) présente une tubulure pour la liaison du corps de base (2) avec un second tube, dans lequel la tubulure de préférence
- présente un filet extérieur (12) ou
- est réalisée comme tubulure de tuyau et présente sur son côté extérieur des moyens à complémentarité de formes.

12. Dispositif de liaison selon l'une quelconque des revendications précédentes, dans lequel le dispositif de raccordement (10)
- est réalisé d'un seul tenant avec le corps de base (2) et/ou
- est formé d'un métal et est relié au corps de base (2).

13. Dispositif de liaison selon l'une quelconque des revendications précédentes, avec une première garniture (6) qui est agencée dans l'ouverture (4) à l'intérieur sur le corps de base (2) pour rendre étanche le corps de base (2) par rapport au tube ondulé (100) et/ou avec une seconde garniture (14) qui est prévue sur le corps de base (2) pour rendre étanche le corps de base (2) par rapport à une seconde unité reliée au dispositif de raccordement (10), dans lequel de préférence, la première et la seconde garniture (6, 14) sont réalisées conjointement d'un seul tenant.

14. Dispositif de liaison selon la revendication 13, dans lequel la garniture (6, 14) s'étend complètement au travers de l'ouverture (4) du corps de base (2) et forme un logement pour le dispositif de raccordement (10) pour le couplage du dispositif de raccordement (10) contre le corps de base (2).
